# EUROPÄISCHE PATENTSCHRIFT

(11) **EP 1 881 908 B1**
(45) Veröffentlichungstag und Bekanntmachung des Hinweises auf die Patenterteilung: **13.08.2008**
(21) Anmeldenummer: 06724463.2
(22) Anmeldetag: 20.04.2006
(51) Int. Cl.: B60K 23/04

(54) **STEUERUNG DER DREHMOMENTÜBERTRAGUNG IN EINEM DIFFERENZIAL**
CONTROL OF TORQUE TRANMISSION IN A DIFFERENTIAL
COMMANDE DE LA TRANSMISSION DE COUPLE DANS UN DIFFERENTIEL

(30) Priorität: 13.05.2005 DE 102005022243
(43) Veröffentlichungstag der Anmeldung: 30.01.2008
(73) Patentinhaber: Volkswagen Aktiengesellschaft, 38436 Wolfsburg (DE)
(72) Erfinder: LUTZ, Wolf-Rüdiger, 38442 Wolfsburg (DE)
(86) Internationale Anmeldenummer: PCT/EP2006/003634
(87) Internationale Veröffentlichungsnummer: WO 2006/122627

(56) Entgegenhaltungen:
- EP-A- 0 240 795
- WO-A-20/05050049
- DE-A- 3 427 725
- DE-A- 4 112 906
- DE-A- 4 404 457
- US-A- 4 467 886

## Beschreibung

Die Erfindung betrifft eine Drehmomentenübertragungseinrichtung in einem Kraftfahrzeug zur variablen Übertragung eines Drehmoments von einem Differenzialgehäuse eines Differenzialgetriebes auf eine einem Rad zugeordneten Welle, umfassend eine Kupplungseinheit zur variablen, drehmomentübertragenden Kopplung des Differenzialgehäuses und der Welle, wobei die Kupplungseinheit wenigstens ein erstes, mit dem Differenzialgehäuse rotationsübertragend verbundenes Kupplungselement und wenigstens ein zweites, mit der Welle rotationsübertragend verbundenes Kupplungselement, die miteinander in drehmomentübertragender Wechselwirkung stehen oder in eine solche bringbar sind, aufweist, steuerbare Stellmittel zur Einstellung der Stärke der Wechselwirkung zwischen den Kupplungselementen durch Einstellung einer relativen Position und/oder einer mechanischen Anpresskraft der Kupplungselemente und Steuermittel zur Ansteuerung der Stellmittel, wobei die Steuermittel eine Datenverarbeitungseinheit enthalten, die geeignet ist, anhand einer Mehrzahl von Eingangssignalen nach vorgegebenen Regeln ein erstes Steuersignal zu berechnen und zur Ansteuerung der Stellmittel auszugeben.

Eine derartige Einrichtung zur Kopplung von zwei Wellen ist beispielsweise bekannt aus der DE 44 04 457 A . Solche Drehmomentübertragungseinrichtungen werden vielfach in Kraftfahrzeugen mit Vierradantrieb verwendet. Bei diesen wird ein erstes Radpaar, in der Regel die Vorderräder, primär von einem Motor angetrieben. Bekannt sind auch Systeme, bei denen vorrangig die Hinterräder angetrieben werden, sowie gleichwertige so genannte Hang-on-Allradlösungen. Das Antriebsdrehmoment wird, beispielsweise mittels eines vorderen Differenzialgetriebes, auch auf eine erste Welle übertragen. Diese ist mit einem ersten Kupplungselement, z.B. einem Satz Kupplungsscheiben oder -lamellen, verbunden. Die Kupplungseinheit dient der steuerbaren Wechselwirkung zwischen dem ersten Kupplungselement und einem zweiten Kupplungselement, beispielsweise einem zweiten Satz Kupplungsscheiben oder -lamellen, welches mit dem ersten Kupplungselement beispielsweise durch Änderung der relativen Position oder der wechselseitigen Anpresskraft in Wechselwirkung gebracht bzw. in ihrer Wechselwirkungsstärke verändert werden können. Grundsätzlich ist hier jede Art Kupplung einsetzbar, beispielsweise mechanische, hydraulische oder hydrodynamische Kupplungen. Mit dem zweiten Kupplungselement steht eine zweite Welle in rotationsübertragender Verbindung, welche ihrerseits, beispielsweise über ein hinteres Differenzialgetriebe, mit dem zweiten Radpaar des Kraftfahrzeugs, in der Regel den Hinterrädern, in Verbindung steht. Je nach Stärke der Wechselwirkung zwischen den Kupplungselementen in der Kupplungseinheit wird ein größeres oder kleineres Drehmoment auf das zweite Radpaar übertragen. Es ist erwünscht, dass das Ausmaß der Drehmomentübertragung von der aktuellen Fahrsituation abhängig gemacht wird. Je nach Fahrsituation wird das Drehmoment variiert, z.B. beim Beschleunigen maximiert, wobei hohe Traktion erreicht wird, und beim Rangieren minimiert, um ein Verspannen des Antriebsstranges zu vermeiden.

Um den vielfältigen möglichen Fahrsituationen gerecht zu werden, ist eine komplexe Ansteuerung der Wechselwirkung zwischen den Kupplungselementen der Kupplungseinheit erforderlich. Es ist bekannt, hierzu steuerbare Stellmittel vorzusehen. In der zitierten Druckschrift wird beispielsweise eine hydraulische Druckkolbeneinrichtung offenbart, mit der die Relativkraft zwischen zwei Sätzen von Kupplungsscheiben variiert werden kann. Zur Ansteuerung der hydraulischen Druckkolbenvorrichtung ist ein elektrisch steuerbares Hydraulikventil vorgesehen. Die Anpassung an die jeweilige Fahrsituation wird erreicht, indem die Ausgangssignale einer Vielzahl von einzelnen Sensoren, beispielsweise Fahrzeuggeschwindigkeitssensoren, einzelne Radgeschwindigkeitssensoren, Längs- und Querbeschleunigungssensoren, Lenkwinkelsensoren etc., als Eingangssignale einer Datenverarbeitungsvorrichtung verwendet werden. Der Signalfluss kann beispielsweise über den fahrzeugintemen CAN-Bus erfolgen. Die Datenverarbeitungseinrichtung, z.B. ein spezielles Steuergerät, ist programmtechnisch so eingerichtet, dass aus der Vielzahl der Eingangssignale nach bestimmten Entscheidungsregeln ein Steuersignal erzeugt wird, welches zur Ansteuerung des Hydraulikventils verwendet wird. Im Detail unterschiedlich, vom Grundprinzip jedoch gleichwirkend sind die in DE 36 26 025 A1 und DE 34 27 725 C2 offenbarten Vorrichtungen.

Mit dem erläuterten Steuerprinzip ist es gelungen, die Drehmomentübertragung sehr gut an unterschiedliche Fahrsituationen anzupassen.

Diese sehr gute Anpassung an unterschiedlichste Bedingungen erfordert jedoch das Erfassen einer Vielzahl von Signalen und deren rechenintensive Verarbeitung. Beides ist vergleichsweise zeitintensiv. Insbesondere wenn Signale, wie beispielsweise die Radgeschwindigkeit, nicht unmittelbar erfasst werden, sondern als Nebenprodukt anderer Berechnungsprozesse in separaten Steuergeräten, wie etwa einem ABS-Steuergerät, anfallen, hinkt das Steuersignal zeitlich verzögert der Änderung der tatsächlichen Fahrsituation hinterher. Diese Verzögerung ist jedoch in der überwiegenden Anzahl der Fälle weitgehend unerheblich. Bei sehr plötzlichen Änderungen der Fahrsituation jedoch, beispielsweise wenn ein einzelnes Rad plötzlich auf eine Eisplatte auffährt oder sich der Schlupf eines oder mehrerer Räder aus anderen Gründen sehr plötzlich ändert, wäre eine noch zeitnähere Anpassung der Drehmomentverteilung wünschenswert.

Es ist die Aufgabe der vorliegenden Erfindung, eine gattungsgemäße Drehmomentübertragungseinrichtung derart weiterzubilden, dass ohne Komplexitätsverlust eine schnellere Anpassung der Drehmomentverteilung einer Antriebsachse in kritischen Fahrsituationen ermöglicht wird.

Diese Aufgabe wird in Verbindung mit den Merkmalen des Oberbegriffs von Anspruch 1 dadurch gelöst, dass dem ersten Steuersignal ein zweites Steuersignal überlagert ist, welches ein Maß für die Differenz der Rotationsgeschwindigkeiten des Differenzialgehäuses und der Welle ist, wobei eine Änderung des zweiten Steuersignals aufgrund einer durch eine Fahrsituationsänderung verursachte Änderung dieser Differenz einer durch dieselbe Fahrsituationsänderung verursachten Änderung des ersten Steuersignals zeitlich vorauseilt.

Es ist die Grundidee der vorliegenden Erfindung, die Ansteuerung der Stellmittel durch eine Superposition zweier Steuersignale unterschiedlicher Herkunft zu bewerkstelligen. Das erste Steuersignal kann dabei das bekannte, komplexe Steuersignal sein, welches geeignet ist, die Drehmomentverteilung einer Antriebsachse in allen sich "langsam" anbahnenden Fahrsituationen zu optimieren. Das zweite Steuersignal wird dagegen aus wenigen Eingangsgrößen, insbesondere lediglich der Differenzgeschwindigkeit des Differenzialgehäuses und der Welle, erzeugt und ist daher deutlich schneller verfügbar als das komplexe Signal. Die Differenzgeschwindigkeit zwischen dem Differenzialgehäuse und der Welle ist insofern für die Erzeugung des zweiten Steuersignals besonders geeignet, da sie stets ein Anzeichen dafür ist, dass ein Rad einer Antriebsachse einen größeren Schlupf zeigt als das andere Rad. Auch ist die Erfassung dieser Differenzgeschwindigkeit, wie weiter unten erläutert werden soll, besonders einfach und daher schnell. Durch die vorliegende Erfindung wird daher eine unmittelbare, wenn auch wenig differenzierte Anpassung der Drehmomentenverteilung bei plötzlich auftretenden Fahrsituationsänderungen ermöglicht. Die sich zeitverzögert einstellende, entsprechende Änderung des komplexen Signals äußert sich dann in einer Feinabstimmung der Drehmomentverteilung. Grundsätzlich ist es zwar möglich, die für die Erzeugung des zweiten Steuersignals erforderliche Differenzgeschwindigkeit zwischen dem Differenzialgehäuse und der Welle direkt zu erfassen. Dies würde jedoch ein eigens hierfür vorgesehenes Differenzgetriebe erfordern. Günstiger ist es daher wie in einer bevorzugten Ausführungsform der Erfindung vorgesehen, die Rotationsgeschwindigkeiten des Differenzialgehäuses und der Welle durch jeweils wenigstens einen eigenen Sensor zu erfassen und einen Komparator vorzusehen, der als Eingangssignale Ausgangssignale dieser Sensoren erfasst und als Komparator-Ausgangssignal das zweite Steuersignal liefert. Alternativ ist es auch möglich einen einzelnen Sensor zu verwenden, der mittels einer intelligenten Auswertelogik die Differenzgeschwindigkeit direkt erfasst. Die genannten Komponenten können als elektrische oder elektronische Standard-Bauteile implementiert sein, was kostengünstig ist und Wartungsfreiheit garantiert.

Bei der konkreten Umsetzung können unterschiedliche Strategien verfolgt werden. Bei einer günstigen Ausführungsform ist etwa vorgesehen, dass die Sensoren jeweils ein analoges, elektrisches Signal liefern, welches ein Maß für die Rotationsgeschwindigkeit des Differenzialgehäuses bzw. der Welle ist. Bei einer solchen Ausführungsform der Sensoren ist es günstig, den Komparator als einen analogen Differenzverstärker auszuführen. Auf diese Weise wird der Zeitverzug, der zwischen dem Eintreten einer neuen Fahrsituation und der Anpassung des zweiten Steuersignals liegt, minimiert. Insbesondere sind keine zeitaufwendigen Berechnungen erforderlich. Auch die Anzahl der Wandlungsvorgänge im Signalweg wird minimiert. Alternativ kann der Komparator jedoch auch so gestaltet sein, dass er eine digitale Datenverarbeitungseinheit umfasst. Diese Variante ist insbesondere günstig, wenn die Sensoren so gestaltet sind, dass sie ein digitales Signal tiefem. Dies ist beispielsweise bei Hall-Sensoren oder Induktivgebern der Fall, die als Ausgangssignal eine elektrische Impulsfolge liefern, wobei die Impulsfrequenz der Rotationsgeschwindigkeit des Differenzialgehäuses bzw. der Welle proportional ist. Derartige Daten könnten von einem digitalen Komparator unmittelbar erfasst und bearbeitet werden, so dass auch hier keine zeitaufwendigen Berechnungen erforderlich sind und das zweite Steuersignal der Fahrsituationsänderung ähnlich schnell folgt wie im rein analogen Fall.

Zur Vereinfachung des Aufbaus und zur Minimierung der Teilezahl ist es günstig, wenn die Sensoren in einem gemeinsamen Gehäuse angeordnet sind. Ein derartiger Doppelsensor kann im Fall einer Kupplungseinheit mit Lamellentrommel unmittelbar benachbart zu dieser angeordnet sein. Günstigerweise kann auch der Komparator in demselben Gehäuse vorgesehen sein.

Wie aus dem Stand der Technik bekannt, ist es besonders günstig, wenn die Stellmittel zur Betätigung der Kupplungseinrichtung als hydraulische Druckkolbenanordnung ausgebildet sind. Gleichwohl sind auch andere Varianten, etwa elektromotorische Stellmittel, denkbar. Auch sind beispielsweise elektrisch angetriebene Scherenhebelsysteme und Kugelrampensysteme als Stellmittel in Drehmomentverteilern bekannt. Der Grundgedanke der Erfindung bleibt davon unberührt. Im jeweiligen Fall kann jedoch die konkrete Verwendung des (Gesamt-) Steuersignals unterschiedlich sein. Im Fall der hydraulischen Druckkolbenanordnung zur Betätigung der Kupplungseinrichtung ist es besonders günstig, ein elektrisch ansteuerbares Hydraulikventil vorzusehen, welches von dem Steuersignal angesteuert wird, um die hydraulische Druckkolbenanordnung zu steuern. Obgleich auch Volumenstrom-proportionale Hydraulikventile grundsätzlich verwendbar sind, ist bei einer besonders günstigen Ausführungsform der Erfindung vorgesehen, das Hydraulikventil als kraftproportionales Ventil auszugestalten.

Alternativ zur Ansteuerung der Druckkolbenanordnung mittels eines Hydraulikventils kann bei einer anderen Ausführungsform der Erfindung vorgesehen sein, das zweite Steuersignal unmittelbar zur Ansteuerung einer Hydraulikpumpe zu verwenden. In vielen Fällen wird diese Variante jedoch gegenüber der Ventil-Variante eine Zeitverzögerung zeigen, da hierbei der relativ hohe Strom des Pumpenmotors variiert werden muss.

Die erfindungsgemäße Drehmomentenübertragungseinrichtung wird insbesondere als Quersperre im einem Differenzialgetriebe verwendet, wobei entweder eine Drehmomentenübertragungseinrichtung auf die einem Antriebsrad einer Antriebsachse zugeordnete Welle wirkt oder zwei Drehmomentenübertragungseinrichtungen jeweils auf eine der beiden Wellen wirken, die den beiden Antriebsrädern einer Antriebsachse zugeordneten sind. Die Quersperrung des Differenzialgetriebes erfolgt insbesondere automatisiert und kann optional unter anderem durch den Fahrer eines Kraftfahrzeuges zu- und abgeschaltet werden. Bei den den Antriebsrädern zugeordneten Wellen handelt es sich bevorzugt um Gelenkwellen.

Weitere Merkmale und Vorteile der vorliegenden Erfindung ergeben sich aus der nachfolgenden, speziellen Beschreibung sowie den Zeichnungen, wobei jedoch anstelle des rotierenden Differenzialgehäuses des Differenzialgetriebes der einfacheren Darstellung wegen eine erste Welle, die Eingangswelle 13 dargestellt wird und die dem Rad zugeordnete Weite als Ausgangswelle 16 dargestellt wird. Diese Vorrichtung ist aus der WO 2005/050049 (Art. 54 (3) EPÜ) bekannt. Die Funktionsweise der dargestellten Drehmomentübertragungseinrichtung entspricht jedoch der erfindungsgemäßen Drehmomentübertragungseinrichtung zur Übertragung eines Drehmoments von einem Differenzialgehäuse auf eine einem Rad zugeordnete Welle.

In den Zeichnungen zeigt
- Figur 1: eine schematische, vereinfachte Darstellung eines Antriebsstranges und einiger Signalwege zur Ansteuerung eines Drehmomentverteilers in einem Kraftfahrzeug.
- Figur 2: eine schematische, vereinfachte Darstellung eines Drehmomentverteilers und seiner Ansteuerung mittels des zweiten Steuersignals.

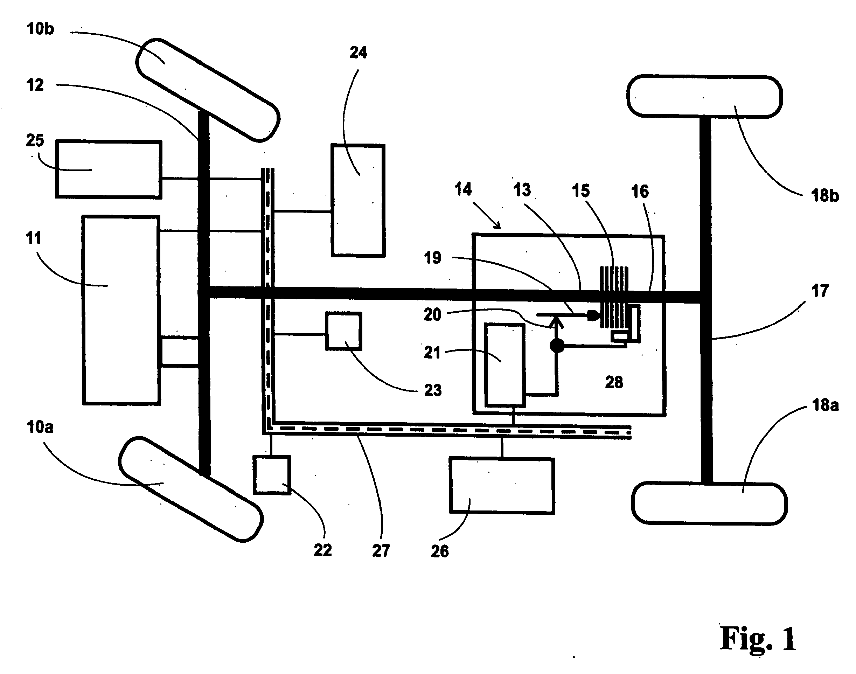

Figur 1 zeigt in schematischer und stark vereinfachter Darstellung den Antriebsstrang und einige Signalwege eines Kraftfahrzeugs mit Vierradantrieb. Ein erstes Radpaar 10a, 10b (Vorder räder) wird direkt von einem Motor 11 angetrieben. Die Rotation der das Radpaar 10a, 10b verbindenden Achse 12 wird mittels eines nicht dargestellten Differenzialgetriebes auf eine erste Welle 13 übertragen, welche die Eingangswelle einer Drehmomentübertragungseinrichtung 14 darstellt. Mittels einer Kupplungseinheit 15 wird das Drehmoment der Eingangswelle 13 teilweise auf eine Ausgangswelle 16 übertragen. Diese treibt über ein ebenfalls nicht dargestelltes Differenzialgetriebe eine Achse 17 an, welche ein zweites Radpaar 18a, 18b (Hinterräder) verbindet. Je nach Einstellung der Kupplungseinheit 15 wird ein größerer oder ein kleinerer Teil des Drehmoments der Eingangswelle 13 auf die Ausgangswelle 16 übertragen.

Die Betätigung der Kupplungseinheit 15, die im gezeigten Ausführungsbeispiel als Lamellentrommel mit miteinander verschachtelt angeordneten Kupplungsscheiben ausgeführt ist, erfolgt mittels eines hydraulischen Druckkolbens 19, der in Figur 1 ebenfalls lediglich als Pfeil angedeutet ist: Die Ansteuerung des Druckkolbens 19 erfolgt im gezeigten Ausführungsbeispiel über ein hydraulisches Steuerventil 20, welches in Figur 1 lediglich als Pfeil angedeutet ist. Zur Steuerung des Ventils 20 ist, wie im Stand der Technik bekannt, ein dem Drehmomentverteiler 14 zugeordnetes Steuergerät 21 vorgesehen.

Das Steuergerät 21 verwendet eine Vielzahl von Eingangssignalen, die ihm von verschiedenen Sensoren des Kraftfahrzeugs, beispielsweise einem Lenkwinkelsensor 22, einem Bremssensor 23, dem Kombigerät 24, dem Motorsteuerungs-Steuergerät 25, dem ABS-EPS-Steuergerät 26, etc. geliefert werden. In dem gezeigten Ausführungsbeispiel sind die Sensoren/Steuergeräte jeweils mit dem CAN-Bus 27 verbunden, an den auch das Drehmomentverteiler-Steuergerät 21 angeschlossen ist. Aus diesen Eingangssignalen berechnet das Drehmomentverteiler-Steuergerät nach komplexen Entscheidungsregeln ein komplexes Steuersignal zur Ansteuerung des Steuerventils 20.

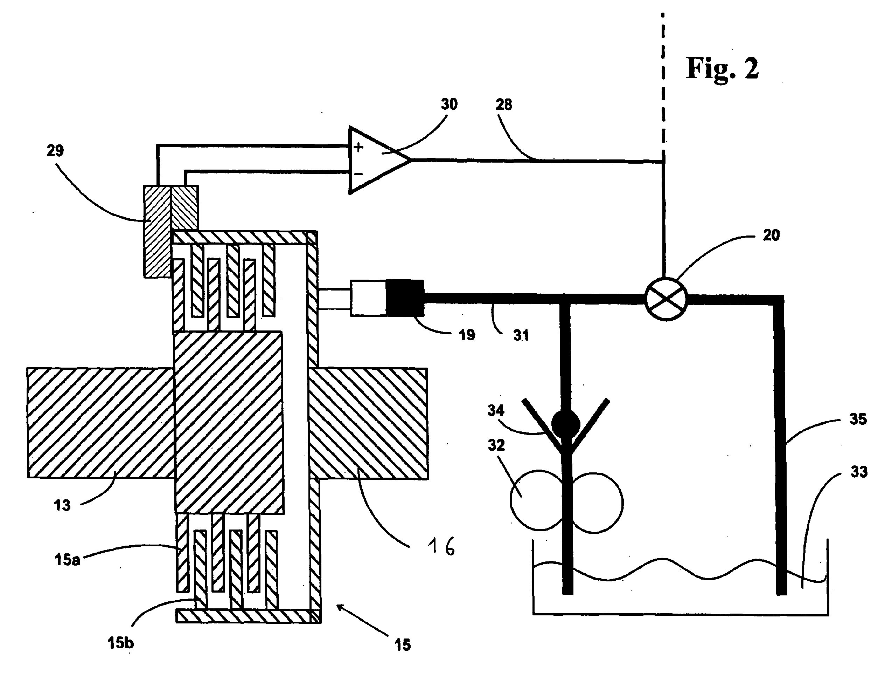

Diesem ersten Regelkreis ist erfindungsgemäß ein zweiter Regelkreis 28 nebengeordnet, der ein zweites Steuersignal erzeugt, welches dem ersten, von dem ersten Regelkreis erzeugten Steuersignal überlagert wird. Das Steuerventil wird daher mittels der Superposition des ersten und zweiten Steuersignals angesteuert. Zur Erläuterung des erfindungsgemäßen zweiten Regelkreises wird auf Figur 2 verwiesen.

Figur 2 zeigt in schematischer, stark vereinfachter Darstellung die Kupplungseinheit 15 und Teile ihrer Ansteuerungsanordnung. Im gezeigten Ausführungsbeispiel ist die Kupplungseinheit 15 als Lamellentrommel ausgeführt, in der miteinander verschachtelt angeordnete Kupplungsscheiben 15a, 15b, die der Eingangswelle 13 (entspricht dem Differenzialgehäuse) bzw. der Ausgangswelle 16 (entspricht der einem Rad zugeordneten
Welle) zugeordnet und rotationsübertragend mit diesen verbunden sind, miteinander wechselwirken können. Die Stärke der Wechselwirkung wird im gezeigten Ausführungsbeispiel durch einen hydraulischen Druckkolben 19 bewerkstelligt, der über eine Druckleitung 31 mit einer Pumpe 32 verbunden ist, die aus einem Hydraulikflüssigkeitsreservoir 33 gespeist wird. Im gezeigten Ausführungsbeispiel sind die Druckleitung 31 und die Pumpe 32 in bekannter Weise über ein Rückschlagventil 34 verbunden. Bei anderen Ausführungsformen können alternative Lösungen verwendet werden. Die Druckleitung 31 ist auch über ein elektrisch ansteuerbares Steuerventil 20 mit einer Rückführleitung 35 verbunden, die Hydraulikflüssigkeit in geregelter Weise dem Flüssigkeitsreservoir 33 zurückführen kann. Bei gleichmäßiger Pumpleistung lässt sich der Druck in der Druckleitung 31 und damit die Stärke der Wechselwirkung zwischen den Kupplungsscheiben 15a und 15b durch Variation der Ventilöffnung 20 einstellen.

Wie bereits erläutert, stammt ein Teil des Steuersignals für das Ventil 20 von dem Drehmomentverteiler-Steuergerät 21. Diese Verbindung ist in Figur 2 gestrichelt angedeutet. Erfindungsgemäß ist ein zweiter Regelkreis 28 vorgesehen, der einen Doppel-Geschwindigkeitssensor 29 aufweist, welcher die jeweiligen Geschwindigkeiten der Eingangswelle 13 und der Ausgangswelle 14 misst und ein entsprechendes Signal ausgibt. Im vorliegenden Fall stellen die Ausgangssignale des Doppel-Geschwindigkeitssensors 29 analoge Spannungsniveaus dar, die in definierter Weise ein Maß für die jeweiligen Wellengeschwindigkeiten sind. Diese Signale werden im gezeigten-Ausführungsbeispiel einem als Differenzverstärker 30 ausgeführten Komparator zugeführt, welcher ein entsprechendes Differenzsignal erzeugt, das ein Maß für die Differenzgeschwindigkeit zwischen der ersten und der zweiten Welle darstellt. Dieses Komparator-Ausgangssignal wird als zweites Steuersignal dem ersten Steuersignal überlagert und bildet mit diesem zusammen das Gesamt-Steuersignal für das Ventil 20.

Aufgrund der geringen Anzahl an Eingangssignalen und der schnellen, analogen Verarbeitung im analogen Differenzverstärker 30 folgt das zweite Steuersignal einer Änderung der Differenzgeschwindigkeit der Wellen 13 und 14 (bzw. des Differenzialgehäuses und, der dem Rad zugeordneten Welle) nahezu ohne Zeitverzögerung. Gleichzeitig ist die Differenzgeschwindigkeit der Wellen 13 und 14 (bzw. des Differenzialgehäuses und der dem Rad zugeordneten Welle) ein unmittelbares Maß für Schlupf wenigstens eines Rades (bzw. des Rades), ohne dass eine genaue Analyse sonstiger Messwerte erforderlich wäre, um diesen Umstand zu erkennen. Bei einer plötzlich eintretenden Änderung der Fahrsituation, beispielsweise wenn das Rad plötzlich auf haftarmen Untergrund gerät und verstärkten Schlupf zeigt, ändert sich das zweite Steuersignal sofort und leitet durch entsprechende Ansteuerung des Ventils 20 unmittelbar eine kompensierende Änderung der Drehmomentenverteilung ein. Dieselbe Änderung der Fahrsituation wird selbstverständlich auch von dem Drehmomentverteiler-Steuergerät 21 erkannt, das hierzu jedoch eine Vielzahl von Eingangssignalen aufnehmen und diese nach komplexen Entscheidungsregeln berechnen muss. Ein entsprechend angepasstes Steuersignal für das Ventil 20 kann daher lediglich zeitverzögert erzeugt werden. Zu diesem Zeitpunkt wurde jedoch bereits durch den inneren Regelkreis eine geeignete Kompensation eingeleitet. Die Änderung des ersten Steuersignals wirkt sich daher nur noch als Feinabstimmung der Drehmomentenverteilung aus. Aufgrund der vorliegenden Erfindung gelingt es, ohne dass an der Komplexität der Anpassung der Drehmomentenverteilung an jeweilige Fahrsituationen durch das erste Steuersignal etwas verloren ginge, durch das erfindungsgemäße, zweite Steuersignal eine deutliche Verkürzung der Antwortzeit der Drehmomentenverteilung auf plötzlich eintretende Fahrsituationsänderungen zu erreichen.

Die vorliegende Erfindung wurde anhand eines speziellen Ausführungsbeispiels dargestellt. Es sind jedoch im Rahmen der Erfindung eine Vielzahl von Variationen denkbar. Beispielsweise kann die erforderliche Druckvariation in der Druckleitung 31 durch direkte Ansteuerung der Pumpe 32 anstelle des Ventils 20 erfolgen. Auch ist es grundsätzlich möglich, die Kupplungseinheit 15 anders als hydraulisch, z.B. elektromotorisch zu betätigen. Weiter ist die Implementierung der Kupplungseinrichtung nicht auf die gezeigte Lamellentrommel beschränkt. Andere Kupplungsformen, beispielsweise hydrodynamische Kupplungen oder ähnliches sind ebenfalls verwendbar. Weiter ist der zweite Regelkreis 28 nicht auf die in Figur 2 gezeigte, analoge Form beschränkt. Insbesondere bei Sensoren, die eine Impulsfolge als Ausgangssignal erzeugen, kann eine digitale Ermittlung der relevanten Differenzgeschwindigkeit zwischen dem Differenzialgehäuse und der dem Rad zugeordneten Welle ähnlich schnell ablaufen wie bei der dargestellten analogen Form. Die hier erforderliche digitale Datenverarbeitungseinheit kann z.B. in dem Drehmomentverteiler-Steuergerät 21 oder auch separat vorgesehen sein.

## Patentansprüche

1. Drehmomentübertragungseinrichtung in einem Kraftfahrzeug zur variablen Übertragung eines Drehmoments von einem Differenzialgehäuse eines Differenzialgetriebes auf eine einem Rad (10a, 10b, 18a, 18b) zugeordneten Welle, umfassend:
- eine Kupplungseinheit (15) zur variablen, drehmomentübertragenden Kopplung des Differenzialgehäuses und der Welle, wobei die Kupplungseinheit (15) wenigstens ein erstes, mit dem Differenzialgehäuse rotationsübertragend verbundenes Kupplungselement (15b) und wenigstens ein zweites, mit der Welle rotationsübertragend verbundenes Kupplungselement, die miteinander in drehmomentübertragender Wechselwirkung stehen oder in eine solche bringbar sind, aufweist;
- steuerbare Stellmittel (19, 20) zur Einstellung der Stärke der Wechselwirkung zwischen den Kupplungselementen (15a, 15b) durch Einstellung einer relativen Position und/oder einer mechanischen Anpresskraft der Kupplungselemente,
- Steuermittel (21) zur Ansteuerung der Stellmittel, wobei die Steuermittel (21) eine Datenverarbeitungseinheit enthalten, die geeignet ist, anhand einer Mehrzahl von Eingangssignalen nach vorgegebenen Regeln ein erstes Steuersignal zu berechnen und zur Ansteuerung der Stellmittel (19, 20) auszugeben,
**dadurch gekennzeichnet, dass** Mittel vorgesehen sind,
die dem ersten Steuersignal ein zweites Steuersignal überlagern, welches ein Maß für die Differenz der Rotationsgeschwindigkeiten des Differenzialgehäuses und der Welle ist, wobei eine Änderung des zweiten Steuersignals aufgrund einer durch die Fahrsituation verursachten Änderung dieser Differenz einer durch dieselbe Fahrsituation verursachten Änderung des ersten Steuersignals zeitlich vorauseilt.

2. Einrichtung nach Anspruch 1, **dadurch gekennzeichnet, dass** Sensoren (29) vorgesehen sind, die jeweils die Rotationsgeschwindigkeiten des Differenzialgehäuses und der Welle erfassen und **dass** ein Komparator (30) vorgesehen ist, der als Eingangssignale Ausgangssignale der Sensoren (29) erfasst und als Komparator-Ausgangssignal das zweite Steuersignal liefert.

3. Einrichtung nach Anspruch 2, **dadurch gekennzeichnet, dass** die Sensoren (29) jeweils ein analoges, elektrisches Signal liefern, welches ein Maß für die Rotationsgeschwindigkeit des Differenzialgehäuses bzw. der Welle ist.

4. Einrichtung nach einem der Ansprüche 2 oder 3, **dadurch gekennzeichnet, dass** der Komparator ein analoger Differenzverstärker (30) ist.

5. Einrichtung nach einem der Ansprüche 2 oder 3, **dadurch gekennzeichnet, dass** der Komparator eine digitale Datenverarbeitungseinheit umfasst.

6. Einrichtung nach einem der Ansprüche 2 bis 5, **dadurch gekennzeichnet, dass** wenigstens einer der Sensoren (29) ein Hall-Element oder einen Induktivgeber umfasst.

7. Einrichtung nach einem der Ansprüche 2 bis 6, **dadurch gekennzeichnet, dass** die Sensoren in einem gemeinsamen Gehäuse(29) angeordnet sind.

8. Einrichtung nach einem der Ansprüche 1 bis 7, **dadurch gekennzeichnet, dass** die Stellmittel eine hydraulische Druckkolbenanordnung (19) umfassen.

9. Einrichtung nach Anspruch 8, **dadurch gekennzeichnet, dass** die Steuerung der hydraulischen Druckkolbenanordnung (19) über die Ansteuerung eines elektrisch ansteuerbaren Hydraulikventils (20) erfolgt.

10. Einrichtung nach Anspruch 9, **dadurch gekennzeichnet, dass** das Hydraulikventil ein kraftproportionales Ventil (20) ist.

11. Einrichtung nach Anspruch 8, **dadurch gekennzeichnet, dass** die Steuerung der hydraulischen Druckkolbenanordnung (19) über die Ansteuerung einer elektrisch ansteuerbaren Hydraulikpumpe (32) erfolgt.

12. Differenzialgetriebe mit einer Drehmomentenübertragungseinrichtung nach mindestens einem der vorhergehenden Ansprüche.

13. Differenzialgetriebe nach Anspruch 12, **dadurch gekennzeichnet, dass** die Übertragungseinrichtung als Quersperre betätigt wird.

14. Differenzialgetriebe nach Anspruch 12 oder 13, **dadurch gekennzeichnet, dass** es zwei Drehmomentenübertragungseinrichtungen nach mindestens einem der Ansprüche 1 bis 11 aufweist, die jeweils auf eine der den beiden Antriebsrädern einer Antriebsachse zugeordneten Wellen wirken.

## Claims

1. Torque transmission device in a motor vehicle for the variable transmission of a torque from a differential housing of a differential gear to a shaft which is assigned to a wheel (10a, 10b, 18a, 18b), comprising:
- a clutch unit (15) for variable torque-transmitting coupling of the differential housing and the shaft, the clutch unit (15) having at least one first clutch element (15b) which is connected in a rotation-transmitting manner to the differential housing and at least one second clutch element which is connected in a rotation-transmitting manner to the shaft, which clutch elements (15a, 15b) are in, or can be placed in, torque-transmitting interaction with one another;
- controllable actuating means (19, 20) for setting the intensity of the interaction between the clutch elements (15a, 15b) by setting a relevant position and/or a mechanical pressing force of the clutch elements,
- control means (21) for actuating the actuating means, the control means (21) comprising a data processing unit which is suitable for calculating a first control signal on the basis of a plurality of input signals and in accordance with predefined rules, and for outputting said signal in order to actuate the actuating means (19, 20),
**characterized**
**in that** means are provided which superpose a second control signal, which is a measure of the difference between the rotational speeds of the differential housing and the shaft, on the first control signal, a change in the second control signal on account of a change in said difference brought about by the driving situation leading, in terms of time, a change in the first control signal caused by the same driving situation.

2. Device according to Claim 1, **characterized in that** sensors (29) are provided which detect in each case the rotational speeds of the differential housing and of the shaft, and **in that** a comparator (30) is provided which detects output signals of the sensors (29) as input signals, and supplies the second control signal as a comparator output signal.

3. Device according to Claim 2, **characterized in that** the sensors (29) each supply an analog electrical signal which is a measure of the rotational speed of the differential housing or of the shaft respectively.

4. Device according to one of Claims 2 or 3, **characterized in that** the comparator is an analog differential amplifier (30).

5. Device according to one of Claims 2 or 3, **characterized in that** the comparator comprises a digital data processing unit.

6. Device according to one of Claims 2 to 5, **characterized in that** at least one of the sensors (29) comprises a Hall element or an inductive sensor.

7. Device according to one of Claims 2 to 6, **characterized in that** the sensors are arranged in a common housing (29).

8. Device according to one of Claims 1 to 7, **characterized in that** the actuating means comprise a hydraulic pressure piston arrangement (19).

9. Device according to Claim 8, **characterized in that** the hydraulic pressure piston arrangement (19) is controlled by the actuation of a hydraulic valve (20) which can be actuated electrically.

10. Device according to Claim 9, **characterized in that** the hydraulic valve is a force-proportional valve (20).

11. Device according to Claim 8, **characterized in that** the hydraulic pressure piston arrangement (19) is controlled by the actuation of a hydraulic pump (32) which can be actuated electrically.

12. Differential gear having a torque transmission device according to at least one of the preceding claims.

13. Differential gear according to Claim 12, **characterized in that** the transmission device is actuated as a transverse lock.

14. Differential gear according to Claim 12 or 13, **characterized in that** said differential gear has two torque transmission devices according to at least one of Claims 1 to 11, which torque transmission devices act in each case on one of the shafts assigned to the two drive wheels of a drive axle.

## Revendications

1. Dispositif de transfert de couple dans un véhicule automobile, pour le transfert variable d'un couple d'un carter de différentiel d'un engrenage différentiel à un arbre associé à une roue (10a, 10b, 18a, 18b), comprenant :
- une unité d'embrayage (15) pour l'accouplement, variable et transmettant le couple, du carter de différentiel et de l'arbre, l'unité d'embrayage (15) présentant au moins un premier élément d'embrayage (15b) connecté au carter de différentiel en transmettant la rotation, et au moins un deuxième élément d'embrayage connecté à l'arbre en transmettant la rotation, lesquels sont en interaction mutuelle de transfert de couple ou peut être amenés dans une telle interaction ;
- des moyens de réglage commandables (19, 20) pour l'ajustement de l'intensité de l'interaction entre les éléments d'accouplement (15a, 15b) par ajustement d'une position relative et/ou d'une force de pression mécanique des éléments d'embrayage,
- des moyens de commande (21) pour commander les moyens de réglage, les moyens de commande (21) contenant une unité de traitement des données, qui est appropriée pour calculer, à l'aide d'une pluralité de signaux d'entrée, en fonction de règles prédéfinies, un premier signal de commande et pour l'émettre pour commander les moyens de réglage (19, 20),
**caractérisé en ce que** l'on prévoit des moyens qui superposent au premier signal de commande un deuxième signal de commande qui constitue une mesure de la différence des vitesses de rotation du carter de différentiel et de l'arbre, une variation du deuxième signal de commande du fait d'une variation de cette différence provoquée par la situation de conduite étant en avance dans le temps par rapport à une variation du premier signal de commande provoquée par la même situation de conduite.

2. Dispositif selon la revendication 1, **caractérisé en ce que** des capteurs (29) sont prévus, lesquels détectent à chaque fois les vitesses de rotation du carter de différentiel et de l'arbre, et **en ce qu'**un comparateur (30) est prévu, lequel détecte, en tant que signaux d'entrée, des signaux de sortie des capteurs (29) et fournit le deuxième signal de commande en tant que signal de sortie du comparateur.

3. Dispositif selon la revendication 2, **caractérisé en ce que** les capteurs (29) fournissent chacun un signal électrique analogique qui constitue une mesure de la vitesse de rotation du carter de différentiel ou de l'arbre.

4. Dispositif selon l'une quelconque des revendications 2 ou 3, **caractérisé en ce que** le comparateur est un amplificateur différentiel analogique (30).

5. Dispositif selon l'une quelconque des revendications 2 ou 3, **caractérisé en ce que** le comparateur comprend une unité de traitement des données numérique.

6. Dispositif selon l'une quelconque des revendications 2 à 5, **caractérisé en ce qu'**au moins l'un des capteurs (29) comprend un élément de Hall ou un capteur inductif.

7. Dispositif selon l'une quelconque des revendications 2 à 6, **caractérisé en ce que** les capteurs sont disposés dans un boîtier commun (29).

8. Dispositif selon l'une quelconque des revendications 1 à 7, **caractérisé en ce que** les moyens de réglage comprennent un agencement de piston de pression hydraulique (19).

9. Dispositif selon la revendication 8, **caractérisé en ce que** la commande de l'agencement de piston de pression (19) s'effectue par le biais de la commande d'une soupape hydraulique (20) à commande électrique.

10. Dispositif selon la revendication 9, **caractérisé en ce que** la soupape hydraulique est une soupape à force proportionnelle (20).

11. Dispositif selon la revendication 8, **caractérisé en ce que** la commande de l'agencement de piston de pression hydraulique (19) s'effectue par le biais de la commande d'une pompe hydraulique (32) à commande électrique.

12. Engrenage différentiel comprenant un dispositif de transfert de couple selon au moins l'une quelconque des revendications précédentes.

13. Engrenage différentiel selon la revendication 12, **caractérisé en ce que** le dispositif de transfert est actionné sous forme de verrouillage de différentiel.

14. Engrenage différentiel selon la revendication 12 ou 13, **caractérisé en ce qu'**il présente deux dispositifs de transfert de couple selon au moins l'une quelconque des revendications 1 à 11, qui agissent respectivement sur l'un des arbres associés aux deux roues d'entraînement d'un essieu d'entraînement.
